(19) **Europäisches Patentamt** / **European Patent Office** / **Office européen des brevets**

(11) **EP 4 773 586 A1**

(12) **EUROPEAN PATENT APPLICATION**
published in accordance with Art. 153(4) EPC

(43) Date of publication:
08.07.2026 Bulletin 2026/28

(21) Application number: 24859471.5

(22) Date of filing: 15.08.2024

(51) International Patent Classification (IPC):
$H04N\ 5/222^{(2006.01)}$    $G06T\ 15/50^{(2011.01)}$
$G06T\ 19/00^{(2011.01)}$    $H04N\ 5/272^{(2006.01)}$
$H04N\ 23/60^{(2023.01)}$

(52) Cooperative Patent Classification (CPC):
G06T 15/506; G06T 15/50; G06T 19/00;
G06T 19/006; H04N 5/222; H04N 5/2224;
H04N 5/272; H04N 23/60; G06T 2215/12

(86) International application number:
PCT/JP2024/029027

(87) International publication number:
WO 2025/047435 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.08.2023 JP 2023139015

(71) Applicant: Sony Group Corporation
Tokyo 108-0075 (JP)

(72) Inventor: IRIE, Daisuke
Tokyo 108-0075 (JP)

(74) Representative: MFG Patentanwälte
Meyer-Wildhagen Meggle-Freund
Gerhard PartG mbB
Amalienstraße 62
80799 München (DE)

(54) **INFORMATION PROCESSING DEVICE, INFORMATION PROCESSING METHOD, AND COMPUTER-READABLE NON-TRANSITORY STORAGE MEDIUM**

(57) This information processing device includes a BRDF acquiring unit, a virtual environment map acquiring unit, and a relighting processing unit. The BRDF acquiring unit estimates a BRDF of a subject based on a photographed video of the subject. The virtual environment map acquiring unit estimates an environment map to be obtained when changing a background scene of the subject to a replacement scene, and acquires the estimated environment map as a virtual environment map. The relighting processing unit generates a relighting video of the subject illuminated in an illumination environment represented by the virtual environment map based on the BRDF of the subject.

FIG.4

## Description

Field

The present invention relates to an information processing device, an information processing method, and a computer-readable non-transitory storage medium.

Background

Virtual production (VP) systems using LED walls have attracted attention. VP is a video production method for synthesizing a live-action video and a CG video in real time. An LED wall displays a background video generated by CG on a large screen combining LED panels. The background video is photographed together with a real subject. The background video changes in accordance with the movement of a cinema camera, and it is possible to obtain a final package that has been synthesized only by performing photographing. Compared to a technique using a green screen or the like, the background video can be seen during photographing, so that a performer or a director can easily call up a finished video.

Citation List

Patent Literature

Patent Literature 1: JP 2003-296759 A
Patent Literature 2: JP 2008-102961 A

Summary

Technical Problem

The subject is illuminated by the LED wall. At the video production site, there are many situations where the background video is changed after photographing, and it is also important, for reduction of photographing cost, to make the photographed video into an asset (reuse in another work in which only the background video is changed). In the VP, the video of the subject serving as the foreground is acquired by live-action imaging. Therefore, if the lighting at the time of photographing is burned into the foreground and the background video is changed, there is a possibility that a mismatch occurs between the lighting of the foreground and the lighting of the background.

Therefore, the present disclosure proposes an information processing device, an information processing method, and a computer-readable non-transitory storage medium, with which inconsistency in lighting between the foreground and the background does not occur even when the background video is changed.

Solution to Problem

According to the present disclosure, an information processing device is provided that comprises: a BRDF acquiring unit configured to estimate a BRDF of a subject based on a photographed video of the subject; a virtual environment map acquiring unit configured to estimate an environment map to be obtained when changing a background scene of the subject to a replacement scene, and to acquire the estimated environment map as a virtual environment map; and a relighting processing unit configured to generate a relighting video of the subject illuminated in an illumination environment represented by the virtual environment map based on the BRDF of the subject. According to the present disclosure, an information processing method in which an information process of the information processing device is executed by a computer, and a computer-readable non-transitory storage medium that stores a program causing a computer to perform the information process of the information processing device are provided.

Brief Description of Drawings

FIG. 1 is a diagram explaining an outline of a VP system.
FIG. 2 is a diagram explaining the outline of the VP system.

FIG. 3 is a diagram explaining a problem regarding lighting of a subject.

FIG. 4 is a diagram explaining an outline of a method according to the present disclosure.

FIG. 5 is a diagram illustrating an example of an environment map.

FIG. 6 is a diagram for explaining a BRDF estimation method.

FIG. 7 is a diagram for explaining the BRDF estimation method.

FIG. 8 is a diagram for explaining the BRDF estimation method.

FIG. 9 is a diagram for explaining relighting processing.

FIG. 10 is a diagram illustrating a configuration example of the VP system according to the present disclosure.

FIG. 11 is a diagram illustrating an example of a method of acquiring a geometric transformation function.

FIG. 12 is a diagram illustrating an example of a method of generating a synthesized environment map.

FIG. 13 is a diagram illustrating an example of luminance calibration.

FIG. 14 is a diagram illustrating an example of a method of acquiring a virtual environment map.

FIG. 15 is a diagram illustrating an example of a processing flow of preliminary preparation before VP photographing.

FIG. 16 is a diagram illustrating an example of a processing flow at the time of VP photographing.

FIG. 17 is a diagram illustrating an example of a hardware configuration of an information processing device.

Description of Embodiment

Hereinafter, an embodiment according to the present disclosure will be described in detail with reference to the drawings. In the following embodiment, the same components are denoted by the same reference numerals, and redundant description will be omitted.

Note that the description will be given in the following order.

[1. Background]

[1-1. VP System]
[1-2. Problem Regarding Lighting of Subject]
[1-3. Outline of Technique according to Present Disclosure]

[2. Configuration of VP System according to Present Disclosure]
[3. Information Processing Method]
[4. Hardware Configuration Example]
[5. Effects]

[1. Background]

[1-1. VP System]

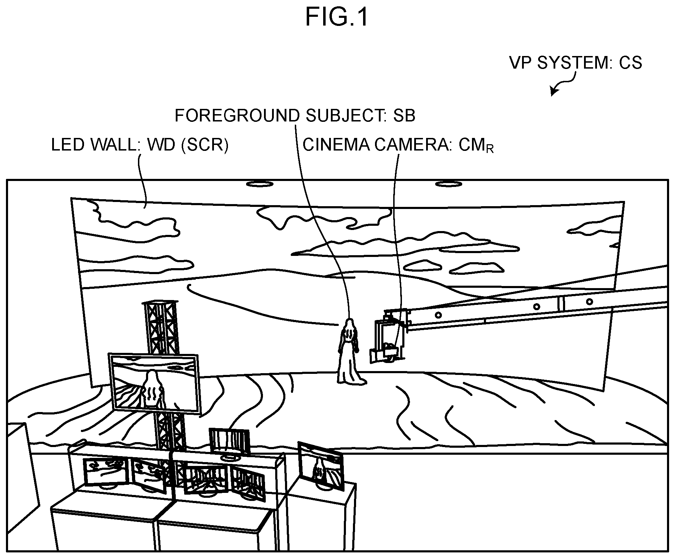

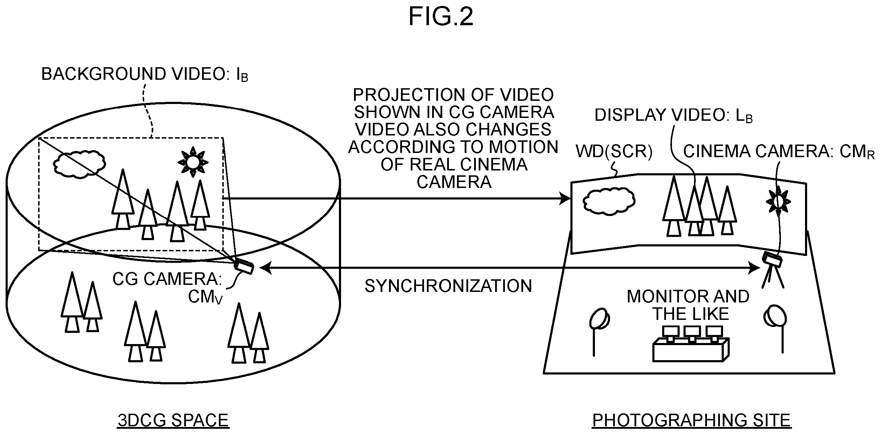

FIGS. 1 and 2 are diagrams explaining an outline of a VP system CS.

The VP system CS is a system that synthesizes a CG video and a live-action video in real time using an LED wall WD and a cinema camera $CM_R$. The LED wall WD is a large display combining a plurality of LED panels. A background CG video (background video $I_B$) is displayed on a screen SCR of the LED wall WD.

The movement of the cinema camera $CM_R$ is detected by a tracker. The tracker tracks the position of the cinema camera $CM_R$ on the studio in real time using an infrared sensor installed on the ceiling of the studio, an IMU mounted on the cinema camera $CM_R$, and the like. In addition to the position of the cinema camera $CM_R$, the tracker also records camera parameters such as the orientation, focus, and lens distortion of the cinema camera $CM_R$ as tracking information.

The tracking information is transmitted to a rendering unit (for example, a PC for rendering). The rendering unit synchronizes a CG camera $CM_V$ in a 3DCG space with the cinema camera $CM_R$ in the real world. The 3DCG space means a three-dimensional virtual space serving as a background of a subject SB. The CG camera $CM_V$ is a virtual camera installed in the 3DCG space. The photographing processing of the CG camera $CM_V$ is performed as rendering processing of the 3DCG data using the camera parameters of the CG camera $CM_V$. The video of the 3DCG space photographed by the CG camera $CM_V$ is acquired as the background video $I_B$.

The position and the camera parameters of the CG camera $CM_V$ are controlled based on the tracking information of the cinema camera $CM_R$. When the position and the camera parameters of the cinema camera $CM_R$ in the real world change, the CG camera $CM_V$ relatively takes the same movement according to the movement. The background video $I_B$ changes in real time in accordance with the movement of the cinema camera $CM_R$. The background video $I_B$ is subjected to distortion correction according to the shape of the screen SCR. The background video $I_B$ after the distortion correction is displayed on the screen SCR as a display video $L_B$.

The display video $L_B$ is photographed together with real subject SB serving as a foreground. The display video $L_B$ viewed from the cinema camera $CM_R$ coincides with the background video $I_B$ of the 3DCG space viewed from the CG camera $CM_V$. Therefore, a final package in which the real subject SB and the background video $I_B$ of the CG are appropriately synthesized can be obtained only by performing photographing with the cinema camera $CM_R$.

[1-2. Problem Regarding Lighting of Subject]

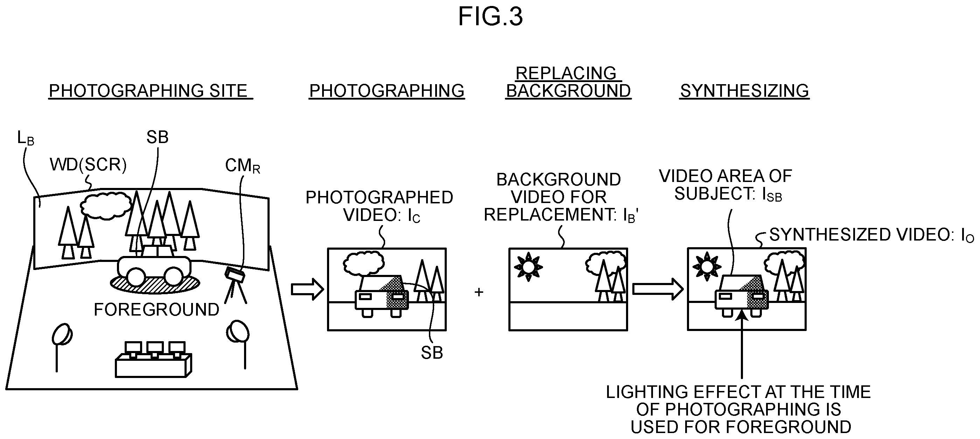

FIG. 3 is a diagram explaining a problem regarding lighting of the subject SB.

In the example of FIG. 3, a real car is installed as a foreground subject SB. On the screen SCR of the LED wall WD, daytime scenery is displayed as the background of the subject SB. Subject SB is illuminated by display video $L_B$ of screen SCR. The scenery displayed on the screen SCR is reflected on a surface of the subject SB on a screen side.

At the video production site, the background may be changed after photographing. In this case, a background portion of a photographed video $I_C$ is changed to another background scene (replacement scene) by post-processing after photographing. In the example of FIG. 3, a dusk scenery is used as a background video $I_B'$ of the replacement scene. From the photographed video $I_C$, a video area of the subject SB is extracted as a subject area $I_{SB}$. The subject area $I_{SB}$ is synthesized with the background video $I_B'$ of the replacement scene, and thus a synthesized video $I_O$ for output is generated.

The subject area $I_{SB}$ is illuminated by a bright video indicating daytime scenery. Since the background after replacement is a dark dusk scenery, lighting is greatly different from that at the time of photographing. Since the lighting effect of the subject area $I_{SB}$ is at the time of photographing, if the background is greatly different from that at the time of photographing, a mismatch occurs between the hue and the movement of the illumination in the foreground and the background.

As a method of changing the background video as the post-processing, there is a technique of the following document. However, the technique of the following document is to increase the resolution of the low-resolution background video and replace the background video, and the lighting situation does not change before and after the replacement. Therefore, the above-described problem cannot be solved even by using the technology of the following document.

[Document] <URL:http://stage.mo-sys.com/wp-content/uploads/2021/08/NearTime-Product-Brochure.pdf> (Searched on April 28, 2023)

In addition, for the convenience of installation of the LED wall WD, it is difficult to arrange the LED wall WD so as to surround an entire circumference of the subject SB. The lighting is performed only from the side of the LED wall WD, and the lighting cannot be performed from the photographer side (the side opposite to the LED wall WD across the subject SB). There is a case in which the studio set on the photographer side may be reflected in the subject SB, resulting in an unnatural video. Such a problem cannot be handled by the method of the above document.

[1-3. Outline of Technique according to Present Disclosure]

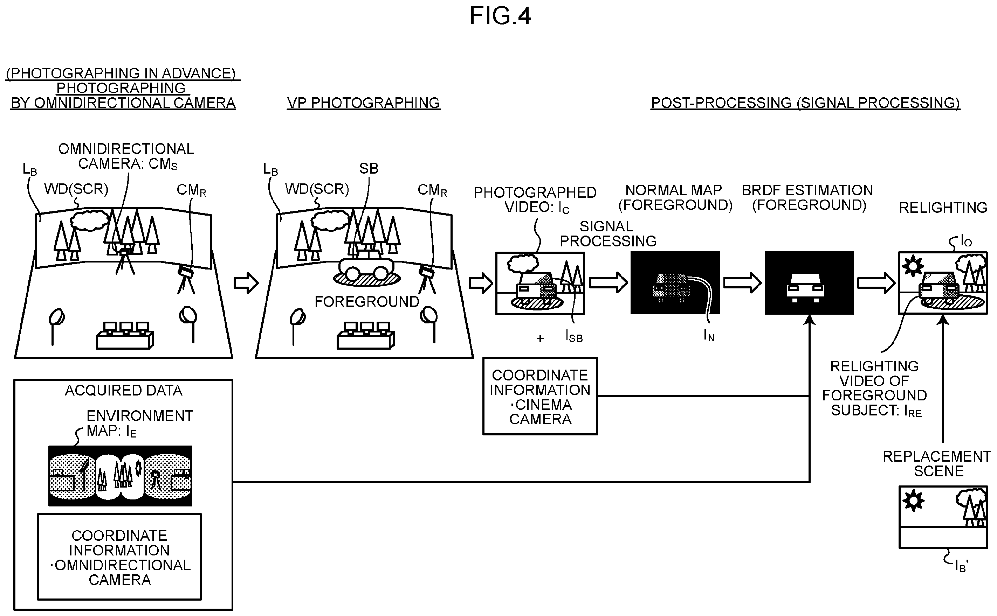

The present disclosure has been made in view of the above problems. In the present disclosure, the reflection characteristic (BRDF: Bidirectional Reflectance Distribution Function) of the subject SB is estimated from the photographed video $I_C$, and relighting of the subject SB is performed based on the replacement scene. Then, the video of the subject SB subjected to relighting is synthesized with the background video $I_B'$ to generate the synthesized video $I_O$ for output. FIG. 4 is a diagram explaining an outline of the method according to the present disclosure.

In order to perform relighting of the subject SB, it is necessary to remove lighting from the surrounding environment burned at the time of photographing. Therefore, first, estimation processing of the BRDF corresponding to the reflectance of the subject SB is performed. The BRDF means an angular distribution characteristic of reflected light when light is incident from a certain angle. By using the BRDF, color appearance under an arbitrary illumination environment (reflected light) can be obtained. This process enables relighting by the background video $I_B'$ after replacement. In order to estimate the BRDF, data such as an environment map $I_E$, a normal map $I_N$, and coordinate information is required in addition to the photographed video $I_C$.

First, as preliminary preparation before VP photographing (actual photographing using the cinema camera $CM_R$) is performed, an operation of acquiring the environment map $I_E$ is performed. The environment map $I_E$ means a video indicating an illumination environment at a position to be measured. The environment map $I_E$ is acquired as a video of an entire circumference viewed from the position to be measured (entire circumference video). As a format of the environment map $I_E$, a cube map, a spherical map, or the like is used. In the present disclosure, a spherical map photographed by an omnidirectional camera $CM_S$ is used as the environment map $I_E$.

The omnidirectional camera $CM_S$ is installed at a position where the subject SB is to be installed in the VP photographing (subject position). The omnidirectional camera $CM_S$ photographs a video of the entire circumference viewed from the subject position. The photographed video of the omnidirectional camera $CM_S$ is acquired as the environment map $I_E$. In the acquisition work of the environment map, coordinate information of the installation position of the omnidirectional camera $CM_S$ is also acquired as prior information.

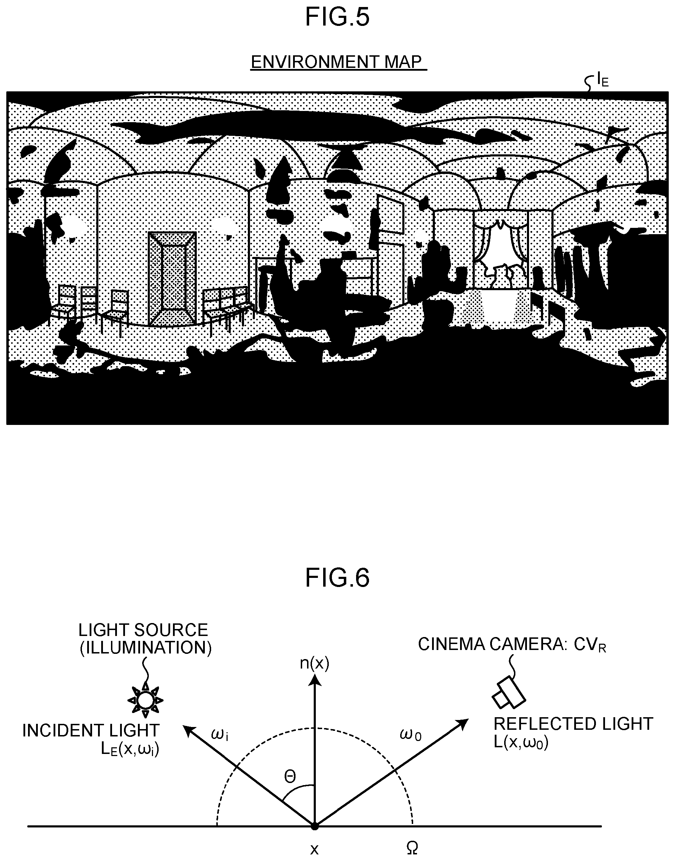

FIG. 5 is a diagram illustrating an example of the environment map $I_E$. In the example of FIG. 5, an omnidirectional image centered on a certain point in the room is illustrated as the environment map $I_E$. The width of the environment map indicates a range of 360 degrees, and the height indicates a range of 180 degrees. In the environment map $I_E$, a point in a three-dimensional space is associated with a point on a two-dimensional plane by a special mapping in order to fit an entire surrounding scenery in a two-dimensional image.

In the VP photographing, the subject SB is photographed together with the display video $L_B$ of the LED wall WD by the cinema camera $CM_R$. The subject SB is illuminated from the LED wall WD side by the display video $L_B$. The photographed video $I_C$ shows the subject SB illuminated by the display video $L_B$. In the VP photographing, coordinate information of the cinema camera $CM_R$ is also acquired as imaging information.

The normal map $I_N$ is acquired by performing signal processing on the subject area $I_{SB}$ of the photographed video $I_C$. The normal map $I_N$ indicates a distribution of normal vectors in the subject area $I_{SB}$. The BRDF of the subject SB is estimated using the photographed video $I_C$, the environment map $I_E$, the normal map $I_N$, the coordinate information of the omnidirectional camera $CM_S$, and the coordinate information of the cinema camera $CM_R$.

FIG. 6 is a diagram for explaining the BRDF estimation method.

In general, a rendering equation of an expression (1) listed below is used for CG rendering of a point on a certain object surface.

$$L(x, \omega_0) = \int_\Omega L_E(x, \omega_i) f_{BRDF}(x, \omega_i, \omega_0) \cos\theta d\omega_i \qquad \cdots (1)$$

In the expression (1), "x" represents a point on a surface of an object. "$\omega_0$" indicates the direction (viewpoint direction) of a camera viewpoint viewed from the point x. "$\omega_i$" indicates a direction (light source direction) of a light source viewed from the point x. "n(x)" indicates a normal line of the object at the point x. "$\theta$" indicates an angle formed by the normal line n(x) and the light source direction $\omega_i$. "$\Omega$" indicates an integration range of $\omega_i$ partitioned by a tangent plane of the point x.

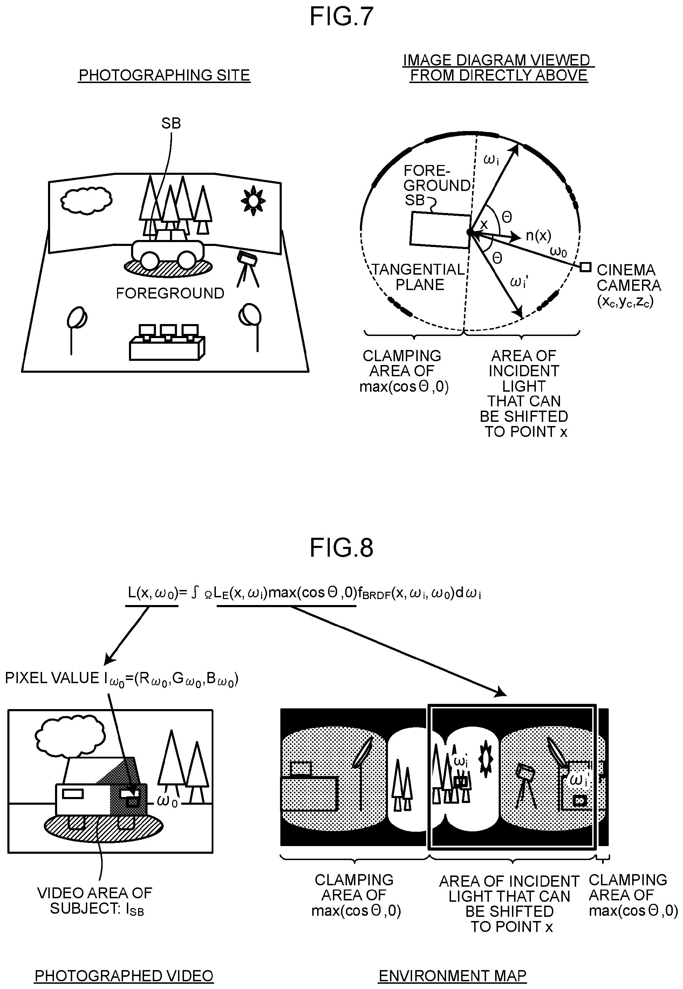

"$L(x, \omega_0)$" indicates the luminance of the reflected light from the point x toward the viewpoint direction $\omega_0$ (the luminance of the reflected light incident on the camera). "$L_E(x, \omega_i)$" indicates the luminance of the illumination light from the light source direction toward the point x (the luminance of the incident light on the point x). The luminance is represented by a pixel value. For example, "$L(x, \omega_0)$" is represented by the pixel value $I_{\omega 0} = (R_{\omega 0}, G_{\omega 0}, B_{\omega 0})$ (see FIG. 8) . Specifically, "$L(x, \omega_0)$" is acquired as a pixel value of the photographed video $I_C$, and "$L_E(x, \omega_i)$" is acquired as a pixel value of the environment map $I_E$.

Further, "$f_{BRDF}$" indicates the BRDF of the subject SB. The color of the point x is determined by the sum of values obtained by multiplying various lights entering from all directions by the reflectance (BRDF) according to the angle of the incident light.

The video acquired by the cinema camera $CM_R$ corresponds to $L(x, \omega_0)$. The environment map $I_E$ corresponds to $L_E(x, \omega_i)$. The BRDF can be estimated as a general inverse rendering problem. The inverse rendering means a technique of estimating any or all of a geometric shape, illumination, and surface reflection characteristics from reflected light (the photographed video $I_C$). In the present disclosure, the geometric shape and the illumination are acquired from the normal map $I_N$ and the environment map $I_E$. The BRDF corresponding to the surface reflection characteristics is obtained from these pieces of information.

Several approximate models are known for the BRDF. The BRDF can be represented by a combination of a plurality of parameterized basis functions. For example, the BRDF is expressed by a combination of a specular reflection model and a diffuse reflection model. Expressions (2) to (4) listed below show an example of the approximate model of the BRFD.

$$f_{BRDF}(x, \omega_i, \omega_0) = f_r(\omega_0, \omega_i) + f_d(\omega_0, \omega_i) \qquad \cdots (2)$$

$$f_r(\omega_0, \omega_i) = \frac{D(h, a)G(\omega_0, \omega_i, a)F(\omega_0, h, f_0)}{4(n, \omega_0)(n, \omega_i)} \qquad \cdots (3)$$

$$f_d(\omega_0, \omega_i) = \frac{\sigma}{\pi} \qquad \cdots (4)$$

Here, "$f_r(\omega_0, \omega_i)$" in the expressions (2) and (3) represents the BRDF expressed by a specular reflection model (specular reflection BRDF). "$f_d(\omega_0, \omega_i)$" in the expressions (2) and (4) represents BRDF expressed by a diffuse reflection model (diffuse reflection BRDF). "D" in the expression (3) represents a normal distribution function. "G" indicates a geometric attenuation term. "F" indicates a Fresnel term. "h" indicates a half vector. "a" indicates diffuse reflectance. "$f_0$" indicates a reflectance of the incident light from the normal direction.

The optimal parameters D, G, and F are obtained by applying the photographed video $I_C$, the environment map $I_E$, the normal map $I_N$, the coordinate information of the omnidirectional camera $CM_S$, and the coordinate information of the cinema camera $CM_R$ to the expressions (1) to (4). This can be solved as a general optimization problem using a technique such as Bayesian optimization. The BRDF is acquired by obtaining the parameters D, G, and F.

The estimation processing of the BRDF can also be performed using an expression (5) instead of the expression (1). FIGS. 7 and 8 are diagrams for explaining a BRDF estimation method using the expression (5).

$$L(x, \omega_0) = \int_\Omega L_E(x, \omega_i) max(cos\theta, 0) f_{BRDF}(x, \omega_i, \omega_0) d\omega_i \qquad \cdots (5)$$

The expression (5) is obtained by replacing "$cos\theta$" in the expression (1) with "$max(cos\theta, 0)$". Here, $max(cos\theta, 0)$ is a function that outputs the larger one of $cos\theta$ and 0. When viewed from a tangential plane of a certain point, a side opposite to a side on which light is incident becomes occlusion, and light does not enter. By $max(cos\theta, 0)$, the calculated value of the area to be occlusion is clamped to 0. This reduces the amount of computation. In FIGS. 7 and 8, an area clamped at 0 by $max(cos\theta, 0)$ is described as a "clamping area".

When the BRDF of the subject SB is acquired, relighting of the subject BRDF is performed based on the background video $I_B$' of the replacement scene. The relighting is performed as a process of obtaining the color of the subject SB under an arbitrary light source.

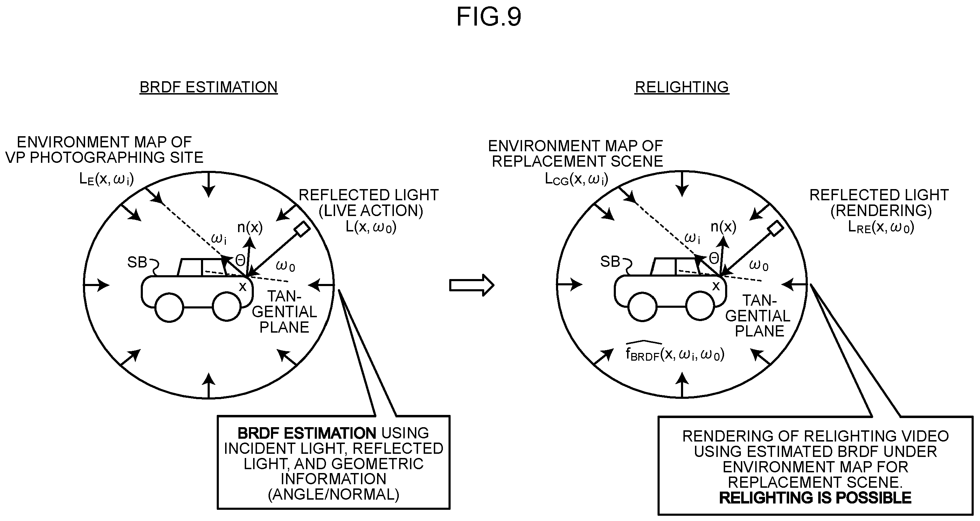

FIG. 9 is a diagram for explaining the relighting processing.

In the relighting processing, a rendering equation shown in an expression (6) listed below is used.

$$L_{RE}(x, \omega_0) = \int_\Omega L_{CG}(x, \omega_i) \widehat{f_{BRDF}}(x, \omega_i, \omega_0) max(cos\theta, 0) d\omega_i \qquad \cdots (6)$$

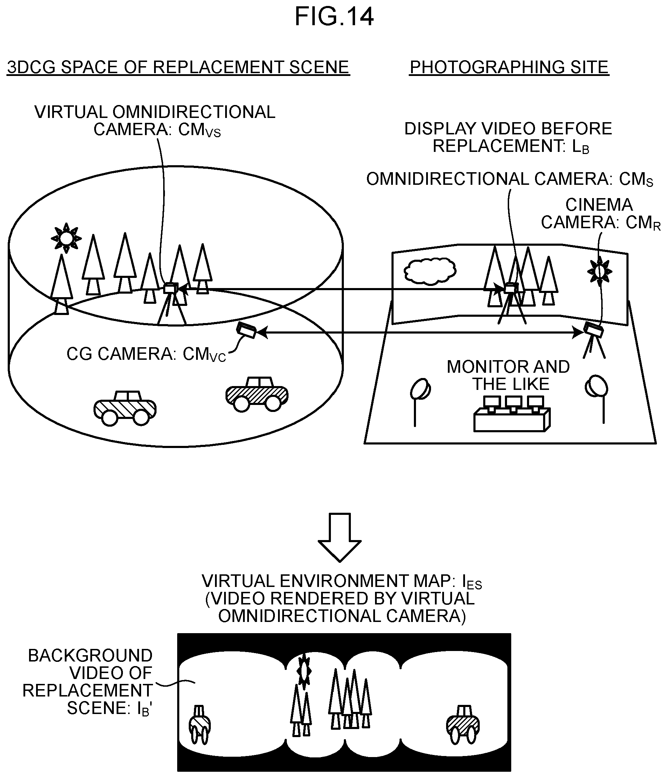

The expression (6) is obtained by replacing "L" and "$L_E$" in the expression (5) with "$L_{RE}$" and "$L_{CG}$". "$L_{CG}$" indicates a virtual entire circumference video (virtual environment map $I_{ES}$: see FIG. 14) calculated from the 3DCG data of the replacement scene. "$L_{RE}$" indicates a relighting video $I_{RE}$ of the subject SB illuminated in the illumination environment (virtual illumination environment) indicated by the virtual environment map $I_{ES}$. A hat symbol attached to "$f_{BRDF}$" indicates that the value is an estimated value of the BRDF.

In FIG. 9, "$L_E$" indicates a real entire circumference video (real environment map) acquired by the omnidirectional camera $CM_S$. In the preliminary preparation before the VP photographing, the estimation processing of the BRDF is performed using the real environment map and the real photographed video $I_C$ (live-action video). In the post-processing after the VP photographing, the relighting video $I_{RE}$ of the subject SB in the virtual illumination environment is estimated based on the estimated BRDF of the subject SB and the virtual environment map $I_{ES}$.

[2. Configuration of VP System according to Present Disclosure]

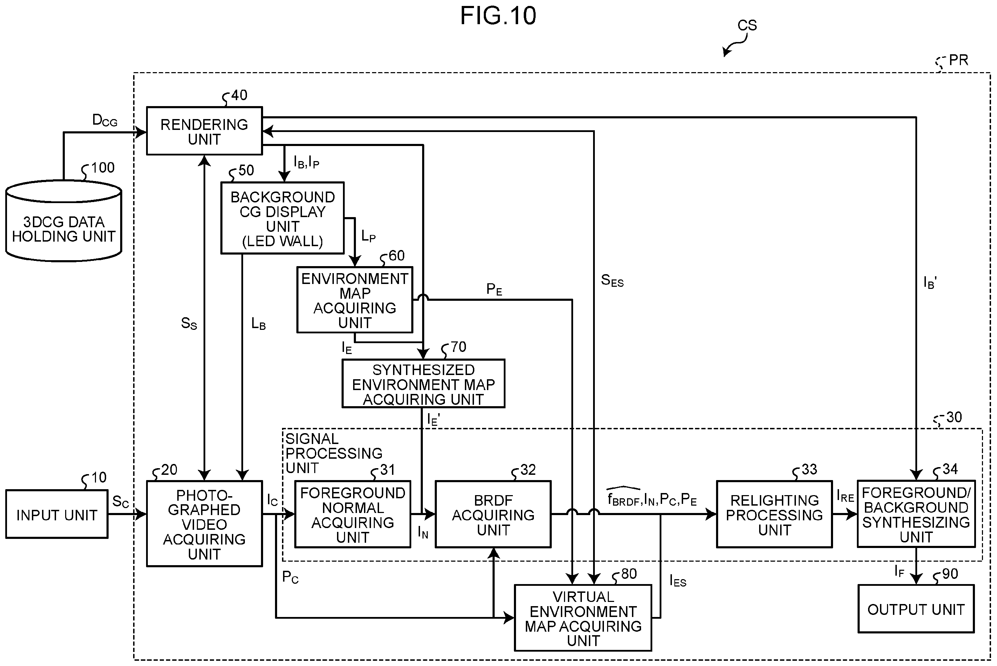

FIG. 10 is a diagram illustrating a configuration example of the VP system CS according to the present disclosure.

The VP system CS includes an input unit 10, a 3DCG data holding unit 100, and an information processing device PR. The 3DCG data holding unit 100 holds various 3DCG data $D_{CG}$. The 3DCG data holding unit 100 transfers the 3DCG data $D_{CG}$ to a rendering unit 40 in response to the reading of the rendering unit 40.

The input unit 10 performs general VP photographing. In the photographing studio, the LED wall WD on which a CG rendering video is displayed and the cinema camera $CM_R$ are installed. An operation signal $S_C$ of the cinema camera $CM_R$ is transmitted to a photographed video acquiring unit 20.

The video processing is performed by the information processing device PR. For example, the information processing device PR includes the photographed video acquiring unit 20, a signal processing unit 30, the rendering unit 40, a background CG display unit 50, an environment map acquiring unit 60, a synthesized environment map acquiring unit 70, a virtual environment map acquiring unit 80, and an output unit 90.

The photographed video acquiring unit 20 operates the cinema camera $CM_R$ based on the operation signal $S_C$ of the input unit, and photographs a video of a stage to be photographed. The imaging target includes the foreground subject SB and an LED wall WD (display video $L_B$) serving as a background. The photographed video acquiring unit 20 transmits the photographed video $I_C$ of the cinema camera $CM_R$ to the signal processing unit 30.

The photographed video acquiring unit 20 acquires camera parameters $P_C$ of the cinema camera $CM_R$. The camera parameters $P_C$ include coordinates, orientation, and focal length of the cinema camera $CM_R$ for each frame. The photographed video acquiring unit 20 transmits the camera parameters $P_C$ to the virtual environment map acquiring unit 80. The photographed video acquiring unit 20 synchronizes the motion and orientation of the cinema camera $CM_R$ with those of the rendering unit 40 by the synchronization signal $S_S$.

The rendering unit 40 reads the 3DCG data $D_{CG}$ from the 3DCG data holding unit 100. The rendering unit 40 renders the 3DCG data $D_{CG}$ based on the viewpoint of the CG camera $CM_V$, and generates a CG video (rendering video). The rendering unit 40 transmits the generated CG video to the background CG display unit 50.

The background CG display unit 50 performs distortion correction on the CG video to generate the display video $L_B$. The distortion correction means processing of correcting the CG video in accordance with the shape of the screen SCR of the LED wall WD so that the same video as the CG video is photographed by the cinema camera $CM_R$. The background CG display unit 50 displays the display video $L_B$ obtained by the distortion correction on the screen SCR.

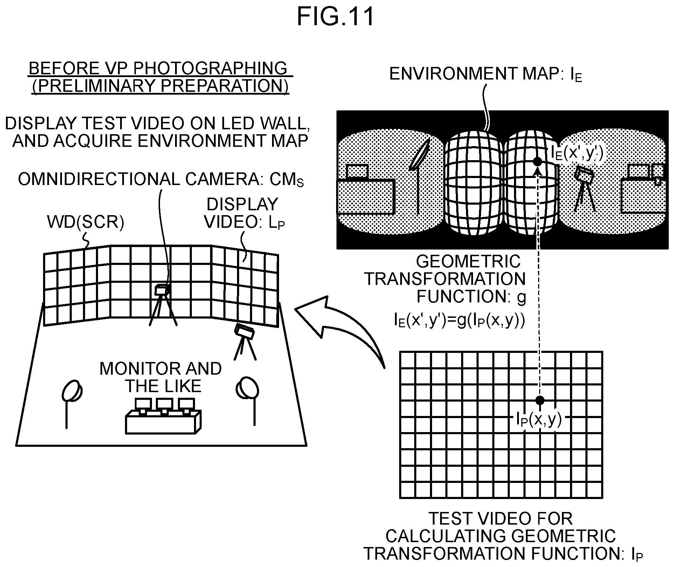

The rendering unit 40 generates the background video $I_B$ and a test video $I_P$ (see FIG. 11) as the CG video. The background video $I_B$ means a video serving as a background of the subject SB. The test video $I_P$ means a video used to obtain a geometric correspondence (geometric transformation function g: see FIG. 11) between the CG video and the environment map $I_E$. The background video $I_B$ is used at the time of VP photographing. The test video $I_P$ is used in preliminary preparation before VP photographing.

The geometric transformation function g is used to synthesize the environment map from the background video $I_B$. In the photographing of a moving image, the illumination environment of the subject SB changes from moment to moment in accordance with the movement of the background video $I_B$. The BRDF may vary depending on the illumination environment. In the single environment map $I_E$ acquired before VP photographing, it is difficult to accurately estimate the BRDF for each background video $I_B$. Ideally, it is desirable to acquire the environment map $I_E$ as a moving image simultaneously with VP photographing. However, it is difficult to install the omnidirectional camera $CM_S$ on the stage during photographing since it becomes an obstacle to photographing.

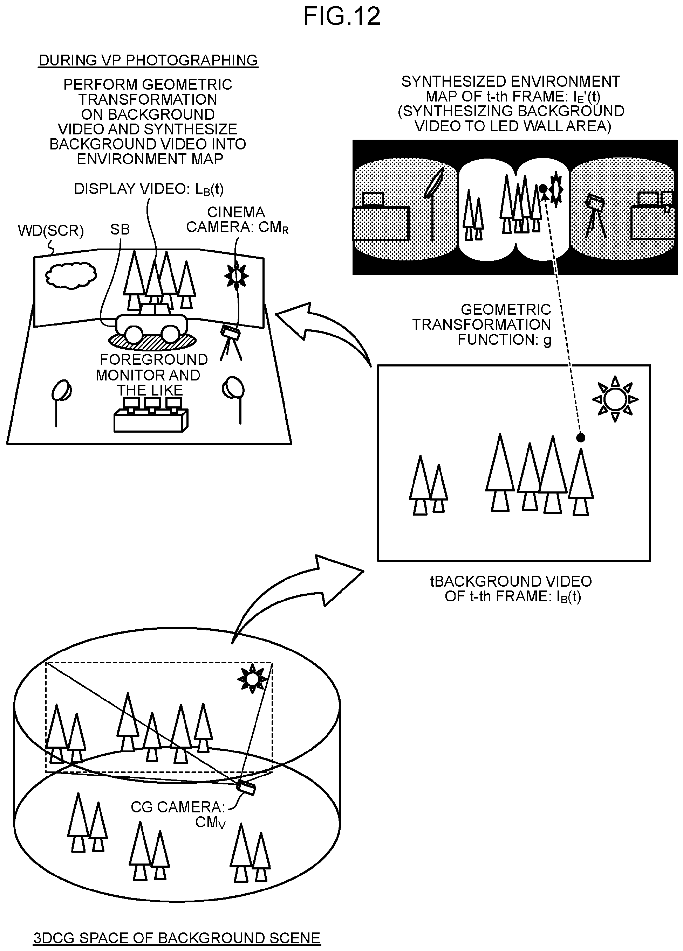

Therefore, the synthesized environment map acquiring unit 70 incorporates the background video $I_B$ into the environment map $I_E$ using the geometric transformation function g. As a result, the synthesized environment map acquiring unit 70 acquires the environment map $I_E$ corresponding to the background video $I_B$ as a synthesized environment map $I_E'$ (see FIG. 12). The geometric transformation function g can be calculated using a general distortion correction model.

FIG. 11 is a diagram illustrating an example of a method of acquiring the geometric transformation function g.

The rendering unit 40 generates a pattern video having a repeated pattern as the test video $I_P$. For example, the pattern video has a lattice-shaped pattern in which a plurality of vertical lines and a plurality of horizontal lines are arranged at regular intervals. The background CG display unit 50 performs distortion correction on the test video $I_P$ to generate a display video $L_P$. The background CG display unit 50 displays the generated display video $L_P$ on the screen SCR.

The environment map acquiring unit 60 photographs the display video $L_P$ on the screen SCR using the omnidirectional camera $CM_S$. The environment map acquiring unit 60 acquires the photographed video of the omnidirectional camera $CM_S$ including the screen SCR as the environment map $I_E$. The environment map acquiring unit 60 transmits camera parameters $P_E$ of the omnidirectional camera $CM_S$ to the signal processing unit 30 and the virtual environment map acquiring unit 80. The camera parameters $P_E$ include a position, an orientation, and a focal length of the omnidirectional camera $CM_S$.

The synthesized environment map acquiring unit 70 calculates the geometric transformation function g indicating mapping between the test video $I_P$ displayed on the screen SCR and the test video $I_P$ shown in the environment map $I_E$. For example, the synthesized environment map acquiring unit 70 acquires coordinates (x, y) of each grid point included in the test video $I_P$ and coordinates (x', y') of each grid point included in the environment map $I_E$. The synthesized environment map acquiring unit 70 calculates the geometric transformation function g using an expression (7) listed below.

$$I_E(x', y') = g(I_P(x, y)) \qquad \cdots (7)$$

FIG. 12 is a diagram illustrating an example of a method of generating the synthesized environment map $I_E'$.

The synthesized environment map acquiring unit 70 detects the position of the screen in the environment map $I_E$. The position of the screen means an area (LED wall area) in which the screen SCR of the LED wall WD is reflected in the environment map $I_E$. The synthesized environment map acquiring unit 70 synthesizes the video (background video $I_B$) on the screen SCR serving as the background of the subject SB with the LED wall area in the environment map $I_E$ to generate the synthesized environment map $I_E$'.

The mapping from the point on the background video $I_B$ to the point on the LED wall area is acquired as the geometric transformation function g. The geometric transformation function g transforms the background video $I_B$ into a distorted video that can be incorporated into the environment map $I_E$. The synthesized environment map acquiring unit 70 synthesizes the background video $I_B$ transformed by the geometric transformation function g with the LED wall area in the environment map $I_E$. By synthesizing the background video $I_B$ with the environment map $I_E$, an environment map corresponding to the background video $I_B$, that is, the synthesized environment map $I_E$' is acquired.

Here, it is assumed that the pixel value of the test video $I_P$ output from the rendering unit 40 is a first pixel value, and the pixel value of the test video $I_P$ shown in the environment map $I_E$ is a second pixel value. The first pixel value and the second pixel value are affected by the luminance level of the LED wall WD and the exposure setting of the omnidirectional camera $CM_S$. Therefore, a deviation may occur between the first pixel value and the second pixel value. Depending on the characteristics and settings of equipment, it is considered that the second pixel value is basically lower than the first pixel value.

The synthesized environment map $I_E$' is created by superimposing the rendering video on the environment map $I_E$. Therefore, there is a possibility of using a pixel value with high luminance or low luminance different from the assumption. In this case, problems such as a decrease in BRDF estimation accuracy and saturation of a luminance level of illumination added at the time of relighting may occur. For example, in a case of photographing a surface of a shiny metal, the luminance of the cinema camera $CM_R$ may be saturated, and it is difficult to accurately estimate the BRDF.

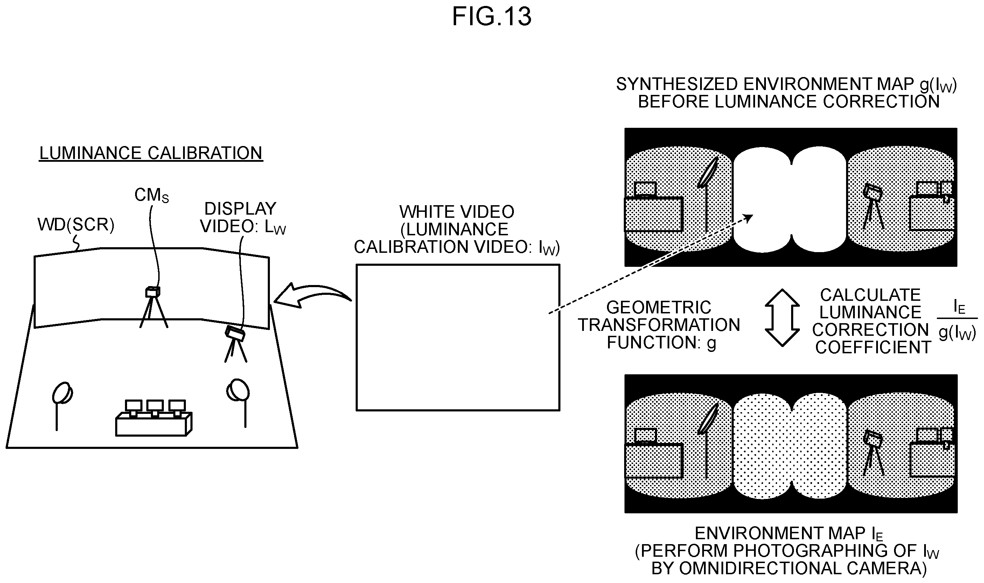

Therefore, in preliminary preparation before VP photographing, a known rendering video may be displayed to calibrate luminance (color). FIG. 13 is a diagram illustrating an example of the luminance calibration.

The rendering unit 40 generates a rendering video for luminance calibration (luminance calibration video $I_W$). For example, the luminance calibration video $I_W$ is a white video. All the pixels in the luminance calibration video $I_W$ are set to the same pixel value indicating white. A white display video $L_W$ is shown on the screen SCR.

The environment map acquiring unit 60 photographs the display video $L_W$ on the screen SCR using the omnidirectional camera $CM_S$. The environment map acquiring unit 60 acquires the environment map $I_E$ in which the display video $L_W$ is photographed. The synthesized environment map acquiring unit 70 calculates a ratio between the pixel value of the luminance calibration video $I_W$ displayed on the screen SCR (first pixel value) and the pixel value of the luminance calibration video $I_W$ shown in the environment map $I_E$ (second pixel value). The synthesized environment map acquiring unit 70 acquires the calculated ratio as a luminance correction coefficient when the background video $I_B$ of the subject SB is synthesized with the environment map $I_E$.

An expression (8) listed below is an expression for calculating the pixel value of the synthesized environment map $I_E$'.

$$ I_E' = \frac{I_E}{g(I_W)} \times g(I_B) \qquad \cdots (8) $$

In the expression (8), "$I_E$" indicates a pixel value of a pixel on the environment map $I_E$. "$g(I_W)$" is a pixel value of a pixel on the luminance calibration video $I_W$ associated with a pixel on the environment map $I_E$ by the geometric transformation function g. "$I_E$'" indicates a pixel value of a pixel on the synthesized environment map $I_E$'. "$g(I_B)$" indicates a pixel value of the pixel of the background video $I_B$ to be superimposed on the pixel on the environment map $I_E$. The luminance correction coefficient is represented by "$I_E/g(I_W)$".

When the subject SB with saturated luminance appears in the camera, warning may be displayed.

The signal processing unit 30 performs relighting processing of the photographed video $I_C$. For example, the signal processing unit 30 includes a foreground normal acquiring unit 31, a BRDF acquiring unit 32, a relighting processing unit 33, and a foreground/background synthesizing unit 34.

The foreground normal acquiring unit 31 analyzes the photographed video $I_C$, and acquires the normal map $I_N$ of the subject area $I_{SB}$ for each frame. The normal map $I_N$ means a distribution diagram of normal vectors. For example, data of the normal vectors acquired for the pixels of the subject area $I_{SB}$ is acquired as the normal map $I_N$. The foreground normal acquiring unit 31 transmits the normal map $I_N$ to the BRDF acquiring unit 32.

The normal map $I_N$ can be acquired using general normal estimation processing. For example, use of classical structure from motion (SfM) and use of an inference method from an RDB (+ depth) image by deep learning can be considered. If necessary, a depth sensor may be attached to the cinema camera $CM_R$ to improve the accuracy of estimating the normal line.

The BRDF acquiring unit 32 estimates the BRDF of the subject SB based on the photographed video $I_C$ of the subject SB. In the estimation processing of the BRDF, the synthesized environment map $I_E$', the normal map $I_N$, the camera parameters $P_C$ of the cinema camera $CM_R$, and the camera parameters $P_E$ of the omnidirectional camera $CM_S$ are used. The BRDF acquiring unit 32 applies inverse rendering to the subject area $I_{SB}$ extracted from the photographed video $I_C$,

and estimates the BRDF matching the synthesized environment map $I_E$'. The BRDF acquiring unit 32 transmits the estimated value of the BRDF and various parameters (the normal map $I_N$, the camera parameters $P_C$, and the camera parameters $P_E$) to the relighting processing unit 33.

The virtual environment map acquiring unit 80 estimates the environment map $I_E$ obtained when the background of the subject SB is changed to a replacement scene. The virtual environment map acquiring unit 80 acquires the estimated environment map $I_E$ as the virtual environment map $I_{ES}$.

FIG. 14 is a diagram illustrating an example of a method of acquiring the virtual environment map $I_{ES}$.

The virtual environment map acquiring unit 80 installs the virtual omnidirectional camera $CM_{VS}$ in the 3DCG space of the replacement scene. The virtual omnidirectional camera $CM_{VS}$ means a virtual omnidirectional camera for photographing an entire circumference video in the 3DCG space. The photographing processing of the virtual omnidirectional camera $CM_{VS}$ is performed as rendering processing of the 3DCG data using the camera parameters of the virtual omnidirectional camera $CM_{VS}$.

The rendering processing is performed by the rendering unit 40. The rendering processing is performed by the virtual environment map acquiring unit 80 outputting an operation command $S_{ES}$ to the rendering unit 40. The operation command $S_{ES}$ includes information on the replacement scene and information on the camera parameters of the virtual omnidirectional camera $CM_{VS}$. The rendering unit 40 generates an entire circumference video corresponding to the operation command $S_{ES}$ and outputs the generated video as the virtual environment map $I_{ES}$.

The camera parameters of the virtual omnidirectional camera $CM_{VS}$ are the same as the camera parameters of the omnidirectional camera $CM_S$. The installation position of the virtual omnidirectional camera $CM_{VS}$ is set such that the positional relationship between the virtual omnidirectional camera $CM_{VS}$ and the CG camera $CM_V$ is equal to the positional relationship between the omnidirectional camera $CM_S$ and the cinema camera $CM_R$. The camera parameters $P_C$ of the cinema camera $CM_R$ and the camera parameters $P_E$ of the omnidirectional camera $CM_S$ are used to calculate the installation position.

The virtual environment map acquiring unit 80 photographs an entire circumference video in the 3DCG space using the virtual omnidirectional camera $CM_{VS}$. The virtual environment map acquiring unit 80 acquires the photographed video of the virtual omnidirectional camera $CM_{VS}$ as the virtual environment map $I_{ES}$.

In a case where the subject SB is illuminated by the LED wall WD, the illumination range is limited to an installation range of the screen SCR. However, in a case where the virtual environment map is generated with the rendering video, there is no limitation on the illumination range. The virtual environment map acquiring unit 80 may use 3DCG data of the replacement scene to acquire the virtual environment map $I_{ES}$ indicating an illumination environment of a range wider than an installation range of the screen SCR.

The relighting processing unit 33 substitutes the BRDF of the subject SB and various parameters (the normal map $I_N$, the camera parameters $P_C$, and the camera parameters $P_E$) into the rendering equation of the expression (6). The relighting processing unit 33 generates a video (relighting video $I_{RE}$) of the subject SB illuminated in the illumination environment represented by the virtual environment map $I_{ES}$ based on the BRDF of the subject SB.

The foreground/background synthesizing unit 34 synthesizes the relighting video $I_{RE}$ of the subject SB with the background video $I_B$' of the subject SB generated using the 3DCG data of the replacement scene. As a result, the synthesized video $I_O$ obtained by synthesizing the relighting video $I_{RE}$ of the subject SB and the background video $I_B$' is obtained. The output unit 90 acquires the generated synthesized video $I_O$ as a final video $I_F$. The output unit 90 may perform post-processing (color conversion and format conversion), which is generally performed, on the synthesized video $I_O$ as necessary.

[3. Information Processing Method]

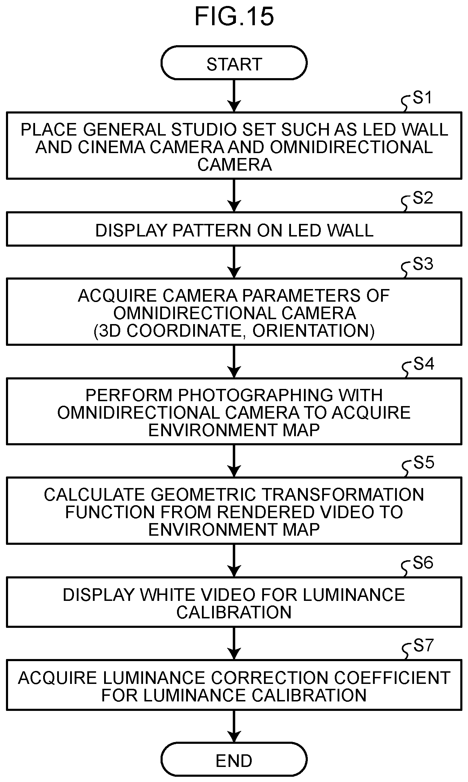

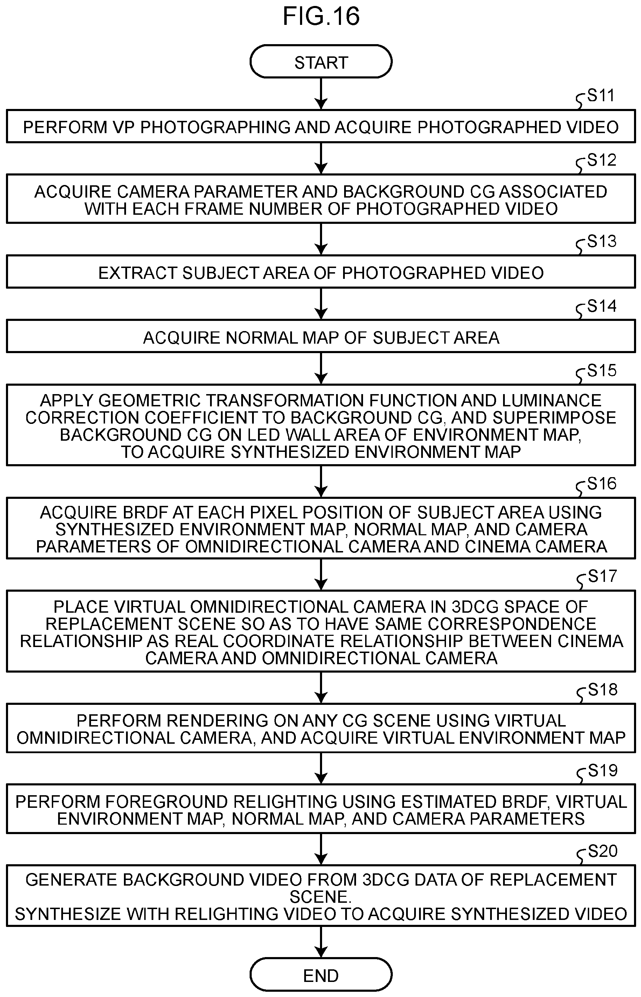

A flow of video processing according to the present disclosure will be described with reference to FIGS. 15 and 16. FIG. 15 is a diagram illustrating an example of a processing flow of the preliminary preparation before VP photographing.

A general studio set such as the LED wall WD and the cinema camera $CM_R$ and the omnidirectional camera $CM_S$ are installed in a studio where VP photographing is performed (step S1). The rendering unit 40 generates a pattern to be the test video $I_P$. The background CG display unit 50 displays the generated pattern on the screen SCR of the LED wall WD (step S2).

The environment map acquiring unit 60 acquires the camera parameters $P_E$ including the position, orientation, and focal length of the omnidirectional camera $CM_S$ (step S3). The environment map acquiring unit 60 performs photographing with the omnidirectional camera $CM_S$. The environment map acquiring unit 60 acquires the entire circumference video photographed by the omnidirectional camera $CM_S$ as the environment map $I_E$ (step S4).

The synthesized environment map acquiring unit 70 acquires the rendering video of the background scene as the background video $I_B$ from the rendering unit 40. The synthesized environment map acquiring unit 70 extracts the LED wall area from the environment map $I_E$. The synthesized environment map acquiring unit 70 calculates the geometric transformation function g from each pixel in the background video $I_B$ to each pixel in the LED wall area (step S5).

The rendering unit 40 generates a white video for luminance calibration. The background CG display unit 50 displays the generated white video on the screen SCR of the LED wall WD (step S6).

The environment map acquiring unit 60 performs photographing with the omnidirectional camera $CM_S$ and acquires the environment map $I_E$ in which the white video is photographed. The synthesized environment map acquiring unit 70 compares the pixel value of the white video acquired as the rendering video with the pixel value of the white video appearing in the environment map $I_E$. The synthesized environment map acquiring unit 70 acquires the luminance correction coefficient when the rendering video is synthesized with the environment map $I_E$ based on the comparison result (step S7).

FIG. 16 is a diagram illustrating an example of the processing flow at the time of VP photographing.

The photographed video acquiring unit 20 operates the cinema camera $CM_R$ to photograph a video including the subject SB (foreground) and the LED wall WD (background) (step S11). The photographed video acquiring unit 20 acquires the photographed video $I_C$ of the cinema camera $CM_R$, and acquires the camera parameters $P_C$ of the cinema camera $CM_R$ and the background video $I_B$ associated with the frame number for each frame of the photographed video $I_C$ (step S12).

The foreground normal acquiring unit 31 extracts the subject area $I_{SB}$ from the photographed video $I_C$ (step S13). The extraction processing of the subject area $I_{SB}$ can be performed using a general foreground/background separation technique. For example, the use of classical Graphcut or deep learning based segmentation processing is conceivable.

The foreground normal acquiring unit 31 acquires the normal map $I_N$ of the subject area $I_{SB}$ (step S14). The synthesized environment map acquiring unit 70 applies the geometric transformation function g and the luminance correction coefficient to the background video $I_B$. The synthesized environment map acquiring unit 70 superimposes the background video $I_B$ deformed by the geometric transformation function g on the LED wall area of the environment map $I_E$ to acquire the synthesized environment map $I_E'$ (step S15).

The BRDF acquiring unit 32 acquires the BRDF of the position of each pixel in the subject area $I_{SB}$ using the synthesized environment map $I_E'$, the normal map $I_N$, the camera parameters $P_E$ of the omnidirectional camera, and the camera parameters $P_C$ of the cinema camera $CM_R$ (step S16).

The virtual environment map acquiring unit 80 installs the virtual omnidirectional camera $CM_{VS}$ in the 3DCG space of the replacement scene (step S17). The installation position of the virtual omnidirectional camera $CM_{VS}$ is set such that the positional relationship between the virtual omnidirectional camera $CM_{VS}$ and the CG camera $CM_V$ is equal to the positional relationship between the omnidirectional camera $CM_S$ and the cinema camera $CM_R$.

The virtual environment map acquiring unit 80 renders the replacement scene using the virtual omnidirectional camera $CM_{VS}$, and acquires the virtual environment map $I_{ES}$ (step S18). The relighting processing unit 33 performs relighting of the subject SB, which is the foreground, by using the estimated value of the BRDF, the virtual environment map $I_{ES}$, the normal map $I_N$, the camera parameters $P_E$, and the camera parameters $P_C$ (step S19).

The rendering unit 40 generates the background video $I_B'$ from the 3DCG data of the replacement scene. The rendering unit 40 matches the imaging frames (rendering frames) of the CG camera $CM_V$ that acquires the background video $I_B'$ with the virtual omnidirectional camera $CM_{VS}$ that acquires the virtual environment map $I_{ES}$. The foreground/-background synthesizing unit 34 synthesizes the generated background video $I_B'$ with the relighting video $I_{RE}$, and acquires the synthesized video $I_O$ (step S20).

[4. Hardware Configuration Example]

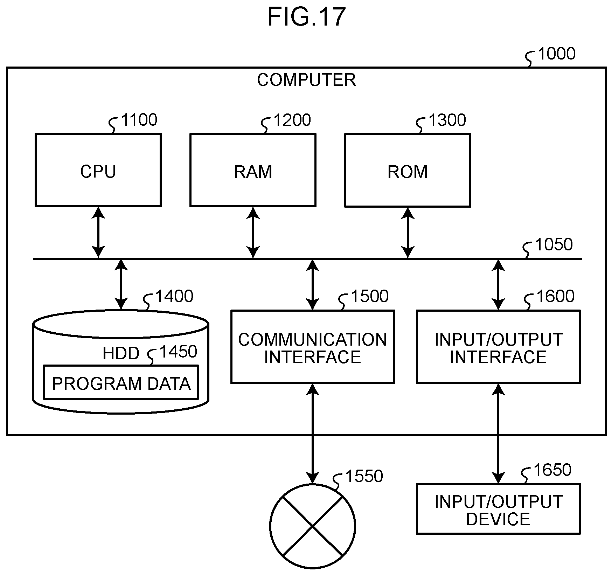

FIG. 17 is a diagram illustrating an example of a hardware configuration of the information processing device PR.

The information processing of the information processing device PR is realized by, for example, a computer 1000. The computer 1000 includes a central processing unit (CPU) 1100, a random access memory (RAM) 1200, a read only memory (ROM) 1300, a hard disk drive (HDD) 1400, a communication interface 1500, and an input/output interface 1600. The units of the computer 1000 are connected by a bus 1050.

The CPU 1100 operates based on a program (program data 1450) stored in the ROM 1300 or the HDD 1400, and controls each unit. For example, the CPU 1100 loads a program stored in the ROM 1300 or the HDD 1400 in the RAM 1200, and executes processing corresponding to various programs.

The ROM 1300 stores a boot program such as a Basic Input Output System (BIOS) executed by the CPU 1100 when the computer 1000 is activated, a program depending on hardware of the computer 1000, and the like.

The HDD 1400 is a non-transitory computer-readable recording medium that non-transitorily records a program executed by the CPU 1100, data used by the program, and the like. Specifically, the HDD 1400 is a recording medium that records the information processing program according to the embodiment as an example of the program data 1450.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. In addition, the CPU 1100 transmits data to an output device such as a display device, a speaker, or a printer via the input/output interface 1600. Furthermore, the input/output interface 1600 may function as a media interface that reads a program or the like recorded in a predetermined recording medium (medium). Examples of the medium include an optical recording medium such as a digital versatile disc (DVD) or a phase change rewritable disk (PD), a magneto-optical recording medium such as a magneto-optical disk (MO), a tape medium, a magnetic recording medium, a semiconductor memory, and the like.

For example, in a case where the computer 1000 functions as the information processing device PR according to the embodiment, the CPU 1100 of the computer 1000 executes the information processing program loaded on the RAM 1200 to implement the functions of the above-described units. In addition, the HDD 1400 stores an information processing program, various models, and various data according to the present disclosure. Note that the CPU 1100 reads the program data 1450 from the HDD 1400 and executes the program data, but as another example, these programs may be acquired from another device via the external network 1550.

[5. Effects]

The information processing device PR includes the BRDF acquiring unit 32, the virtual environment map acquiring unit 80, and the relighting processing unit 33. The BRDF acquiring unit 32 estimates the BRDF of the subject SB based on the photographed video $I_C$ of the subject SB. The virtual environment map acquiring unit 80 estimates the environment map $I_E$ to be obtained when changing the background scene of the subject SB to a replacement scene, and acquires the estimated environment map $I_E$ as the virtual environment map $I_{ES}$. The relighting processing unit 33 generates a relighting video $I_{RE}$ of the subject SB illuminated in the illumination environment represented by the virtual environment map $I_{ES}$ based on the BRDF of the subject SB.

In the information processing method according to the present disclosure, the processing of the information processing device PR is executed by the computer 1000. The computer-readable non-transitory storage medium according to the present disclosure stores a program for causing the computer 1000 to implement the processing of the information processing device PR.

According to this configuration, even if the background video $I_B$ is changed, the relighting processing according to the changed background video $I_B'$ is performed on the subject SB. Therefore, the lighting mismatch between the foreground and the background does not occur.

The information processing device PR includes the synthesized environment map acquiring unit 70. The synthesized environment map acquiring unit 70 synthesizes the video on the screen SCR serving as the background of the subject SB with the position of the screen SCR in the environment map $I_E$ to generate the synthesized environment map $I_E'$. The BRDF acquiring unit 32 applies inverse rendering to the video area of the subject SB extracted from the photographed video $I_C$, and estimates the BRDF matching the synthesized environment map $I_E'$.

According to this configuration, an appropriate BRDF corresponding to the background video $I_B$ is acquired. Since the background video $I_B$ moves in accordance with the movement of the cinema camera $CM_R$, it is difficult to estimate the BRDF only with the single environment map $I_E$ that has been photographed in advance. Ideally, it is desirable to acquire the environment map $I_E$ as a moving image at the same time as the VP photographing, but it is difficult to install the omnidirectional camera $CM_S$ or the like on the stage during photographing. According to the present configuration, the environment map $I_E$ is simulated based on the background video $I_B$. Therefore, the BRDF with high accuracy corresponding to the background video $I_B$ is acquired without installing the omnidirectional camera $CM_S$.

The information processing device PR includes the environment map acquiring unit 60. The environment map acquiring unit 60 acquires the environment map $I_E$ in which the screen SCR appears. The synthesized environment map acquiring unit 70 calculates the geometric transformation function g indicating mapping between the test video $I_P$ displayed on the screen SCR and the test video $I_P$ shown in the environment map $I_E$. The synthesized environment map acquiring unit 70 synthesizes the video on the screen SCR transformed by the geometric transformation function g with the position of the screen SCR in the environment map $I_E$.

According to this configuration, the synthesized environment map $I_E'$ with high accuracy can be obtained for the arbitrary background video $I_B$.

The information processing device PR includes the rendering unit 40. The rendering unit 40 generates a pattern video having a repeated pattern as the test video $I_P$.

According to this configuration, the geometric transformation function g with high accuracy is obtained.

The synthesized environment map acquiring unit 70 calculates a ratio between the pixel value of the luminance calibration video $I_W$ displayed on the screen SCR and the pixel value of the luminance calibration video $I_W$ shown in the environment map $I_E$. The synthesized environment map acquiring unit 70 acquires the calculated ratio as a luminance correction coefficient when the background video $I_B$ of the subject SB is synthesized with the environment map $I_E$.

According to this configuration, the synthesized environment map $I_E$' with high accuracy can be obtained.

The luminance calibration video $I_W$ is a white video.

According to this configuration, the luminance correction coefficient with high accuracy can be obtained.

The virtual environment map acquiring unit 80 uses the 3DCG data of the replacement scene to acquire the virtual environment map $I_{ES}$ indicating the illumination environment of a range wider than the installation range of the screen SCR.

According to this configuration, various illumination environments that cannot be obtained only by the background video $I_B$ projected on the screen SCR are realized. In the normal VP photographing, the subject SB is illuminated only by the background video $I_B$ projected on the screen SCR. It is difficult to perform lighting from the camera side or the studio side where the screen SCR is not installed. If it is attempted to forcibly perform lighting, a studio set or the like is reflected, and an unnatural video is obtained. According to the present configuration, an arbitrary illumination space can be constructed based on the 3DCG data of the replacement scene. Since lighting from all directions of 360 degrees can be expressed, lighting expression from the camera side or the studio side, which is difficult in normal VP photographing, becomes possible.

The information processing device PR includes the foreground/background synthesizing unit 34. The foreground/background synthesizing unit 34 synthesizes the relighting video $I_{RE}$ of the subject SB with the background video $I_B$' of the subject SB generated using the 3DCG data of the replacement scene.

According to this configuration, a natural video in which background reflection is appropriately performed can be obtained.

Note that the effects described in the present specification are merely examples and are not limited, and other effects may be provided.

[Supplementary Note]

Note that the present technology can also adopt the following configurations.

(1) An information processing device comprising:

a BRDF acquiring unit configured to estimate a BRDF of a subject based on a photographed video of the subject;
a virtual environment map acquiring unit configured to estimate an environment map to be obtained when changing a background scene of the subject to a replacement scene, and to acquire the estimated environment map as a virtual environment map; and
a relighting processing unit configured to generate a relighting video of the subject illuminated in an illumination environment represented by the virtual environment map based on the BRDF of the subject.

(2) The information processing device according to (1), further comprising:

a synthesized environment map acquiring unit configured to synthesize a video on a screen serving as a background of the subject with a position of the screen in an environment map to generate a synthesized environment map, wherein
the BRDF acquiring unit applies inverse rendering to a video area of the subject extracted from the photographed video, and estimates the BRDF that matches the synthesized environment map.

(3) The information processing device according to (2), further comprising:

an environment map acquiring unit configured to acquire the environment map on which the screen appears, wherein
the synthesized environment map acquiring unit:

calculates a geometric transformation function indicating mapping between a test video displayed on the screen and a test video shown in the environment map; and
synthesizes the video on the screen transformed by the geometric transformation function with the position of the screen in the environment map.

(4) The information processing device according to (3), further comprising:
a rendering unit configured to generate, as the test video, a pattern video having a repeated pattern.

(5) The information processing device according to (3) or (4), wherein
the synthesized environment map acquiring unit:

calculates a ratio between a pixel value of a luminance calibration video displayed on the screen and a pixel value of the luminance calibration video shown in the environment map; and

acquires the calculated ratio as a luminance correction coefficient for synthesizing the background video of the subject with the environment map.

(6) The information processing device according to (5), wherein
the luminance calibration video is a white video.
(7) The information processing device according to any one of (2) to (6), wherein
the virtual environment map acquiring unit uses 3DCG data of the replacement scene to acquire the virtual environment map indicating an illumination environment of a range wider than an installation range of the screen.
(8) The information processing device according to (7), further comprising:
a foreground/background synthesizing unit configured to synthesize the relighting video of the subject with a background video of the subject generated using the 3DCG data of the replacement scene.
(9) An information processing method executed by a computer, the method comprising:

estimating a BRDF of a subject based on a photographed video of the subject;
estimating an environment map to be obtained when changing a background scene of the subject to a replacement scene, and acquiring the estimated environment map as a virtual environment map; and
generating a relighting video of the subject illuminated in an illumination environment represented by the virtual environment map based on the BRDF of the subject.

(10) A computer-readable non-transitory storage medium storing a program for causing a computer to implement:

estimating a BRDF of a subject based on a photographed video of the subject;
estimating an environment map to be obtained when changing a background scene of the subject to a replacement scene, and acquiring the estimated environment map as a virtual environment map; and
generating a relighting video of the subject illuminated in an illumination environment represented by the virtual environment map based on the BRDF of the subject.

Reference Signs List

32 BRDF ACQUIRING UNIT
33 RELIGHTING PROCESSING UNIT
34 FOREGROUND/BACKGROUND SYNTHESIZING UNIT
40 RENDERING UNIT
60 ENVIRONMENT MAP ACQUIRING UNIT
70 SYNTHESIZED ENVIRONMENT MAP ACQUIRING UNIT
80 VIRTUAL ENVIRONMENT MAP ACQUIRING UNIT
g GEOMETRIC TRANSFORMATION FUNCTION
$I_B$, $I_B$' BACKGROUND VIDEO
$I_C$ PHOTOGRAPHED VIDEO
$I_E$ ENVIRONMENT MAP
$I_E$' SYNTHESIZED ENVIRONMENT MAP
$I_{ES}$ VIRTUAL ENVIRONMENT MAP
$I_P$ TEST VIDEO
$I_{RE}$ RELIGHTING VIDEO
$I_W$ LUMINANCE CALIBRATION VIDEO
PR INFORMATION PROCESSING DEVICE
SB SUBJECT
SCR SCREEN

**Claims**

1. An information processing device comprising:

a BRDF acquiring unit configured to estimate a BRDF of a subject based on a photographed video of the subject;
a virtual environment map acquiring unit configured to estimate an environment map to be obtained when changing a background scene of the subject to a replacement scene, and to acquire the estimated environment map as a virtual environment map; and
a relighting processing unit configured to generate a relighting video of the subject illuminated in an illumination environment represented by the virtual environment map based on the BRDF of the subject.

2. The information processing device according to claim 1, further comprising:

a synthesized environment map acquiring unit configured to synthesize a video on a screen serving as a background of the subject with a position of the screen in an environment map to generate a synthesized environment map, wherein
the BRDF acquiring unit applies inverse rendering to a video area of the subject extracted from the photographed video, and estimates the BRDF that matches the synthesized environment map.

3. The information processing device according to claim 2, further comprising:

an environment map acquiring unit configured to acquire the environment map on which the screen appears, wherein
the synthesized environment map acquiring unit:

calculates a geometric transformation function indicating mapping between a test video displayed on the screen and a test video shown in the environment map; and
synthesizes the video on the screen transformed by the geometric transformation function with the position of the screen in the environment map.

4. The information processing device according to claim 3, further comprising:
a rendering unit configured to generate, as the test video, a pattern video having a repeated pattern.

5. The information processing device according to claim 3, wherein
the synthesized environment map acquiring unit:

calculates a ratio between a pixel value of a luminance calibration video displayed on the screen and a pixel value of the luminance calibration video shown in the environment map; and
acquires the calculated ratio as a luminance correction coefficient for synthesizing the background video of the subject with the environment map.

6. The information processing device according to claim 5, wherein the luminance calibration video is a white video.

7. The information processing device according to claim 2, wherein
the virtual environment map acquiring unit uses 3DCG data of the replacement scene to acquire the virtual environment map indicating an illumination environment of a range wider than an installation range of the screen.

8. The information processing device according to claim 7, further comprising:
a foreground/background synthesizing unit configured to synthesize the relighting video of the subject with a background video of the subject generated using the 3DCG data of the replacement scene.

9. An information processing method executed by a computer, the method comprising:

estimating a BRDF of a subject based on a photographed video of the subject;
estimating an environment map to be obtained when changing a background scene of the subject to a replacement scene, and acquiring the estimated environment map as a virtual environment map; and
generating a relighting video of the subject illuminated in an illumination environment represented by the virtual environment map based on the BRDF of the subject.

10. A computer-readable non-transitory storage medium storing a program for causing a computer to implement:

estimating a BRDF of a subject based on a photographed video of the subject;

estimating an environment map to be obtained when changing a background scene of the subject to a replacement scene, and acquiring the estimated environment map as a virtual environment map; and generating a relighting video of the subject illuminated in an illumination environment represented by the virtual environment map based on the BRDF of the subject.

# FIG.1

VP SYSTEM: CS

FOREGROUND SUBJECT: SB

LED WALL: WD (SCR)　　CINEMA CAMERA: $CM_R$

# FIG.2

BACKGROUND VIDEO: $I_B$

PROJECTION OF VIDEO SHOWN IN CG CAMERA VIDEO ALSO CHANGES ACCORDING TO MOTION OF REAL CINEMA CAMERA

DISPLAY VIDEO: $L_B$

WD(SCR)

CINEMA CAMERA: $CM_R$

CG CAMERA: $CM_V$

SYNCHRONIZATION

MONITOR AND THE LIKE

3DCG SPACE

PHOTOGRAPHING SITE

# FIG.3

PHOTOGRAPHING SITE     PHOTOGRAPHING     REPLACING BACKGROUND     SYNTHESIZING

L_B

SB

WD(SCR)

CM_R

FOREGROUND

PHOTOGRAPHED VIDEO: I_C

SB

BACKGROUND VIDEO FOR REPLACEMENT: I_B'

VIDEO AREA OF SUBJECT: I_SB

SYNTHESIZED VIDEO: I_O

LIGHTING EFFECT AT THE TIME OF PHOTOGRAPHING IS USED FOR FOREGROUND

# FIG.4

EP 4 773 586 A1

**(PHOTOGRAPHING IN ADVANCE)**
**PHOTOGRAPHING BY OMNIDIRECTIONAL CAMERA**

**VP PHOTOGRAPHING**

**POST-PROCESSING (SIGNAL PROCESSING)**

OMNIDIRECTIONAL CAMERA: $CM_S$

$L_B$  WD(SCR)  $CM_R$

$L_B$  SB  WD(SCR)  $CM_R$

FOREGROUND

PHOTOGRAPHED VIDEO: $I_C$

SIGNAL PROCESSING

$+$  $I_{SB}$

NORMAL MAP (FOREGROUND)

$I_N$

BRDF ESTIMATION (FOREGROUND)

RELIGHTING

$I_O$

ACQUIRED DATA

ENVIRONMENT MAP: $I_E$

COORDINATE INFORMATION ·OMNIDIRECTIONAL CAMERA

COORDINATE INFORMATION ·CINEMA CAMERA

RELIGHTING VIDEO OF FOREGROUND SUBJECT: $I_{RE}$

REPLACEMENT SCENE

$I_B'$

# FIG.5

## ENVIRONMENT MAP

$I_E$

# FIG.6

LIGHT SOURCE
(ILLUMINATION)

CINEMA CAMERA: $CV_R$

$n(x)$

INCIDENT LIGHT
$L_E(x, \omega_i)$

$\omega_i$

$\omega_0$

REFLECTED LIGHT
$L(x, \omega_0)$

$\Theta$

x          $\Omega$

# FIG.7

PHOTOGRAPHING SITE

IMAGE DIAGRAM VIEWED FROM DIRECTLY ABOVE

# FIG.8

$$L(x,\omega_0)= \int_\Omega L_E(x,\omega_i)\max(\cos\Theta,0)f_{BRDF}(x,\omega_i,\omega_0)d\omega_i$$

PIXEL VALUE $I_{\omega_0}=(R_{\omega_0},G_{\omega_0},B_{\omega_0})$

VIDEO AREA OF SUBJECT: $I_{SB}$

CLAMPING AREA OF max($\cos\Theta$,0)

AREA OF INCIDENT LIGHT THAT CAN BE SHIFTED TO POINT x

CLAMPING AREA OF max($\cos\Theta$,0)

PHOTOGRAPHED VIDEO

ENVIRONMENT MAP

# FIG.9

BRDF ESTIMATION

ENVIRONMENT MAP OF
VP PHOTOGRAPHING SITE
$L_E(x, \omega_i)$

REFLECTED LIGHT
(LIVE ACTION)
$L(x, \omega_0)$

$n(x)$
$\omega_i$
$\theta$
$\omega_0$
SB
x
TAN-
GENTIAL
PLANE

BRDF ESTIMATION USING
INCIDENT LIGHT, REFLECTED
LIGHT, AND GEOMETRIC
INFORMATION
(ANGLE/NORMAL)

RELIGHTING

ENVIRONMENT MAP OF
REPLACEMENT SCENE
$L_{CG}(x, \omega_i)$

REFLECTED LIGHT
(RENDERING)
$L_{RE}(x, \omega_0)$

$n(x)$
$\omega_i$
$\theta$
$\omega_0$
SB
x
TAN-
GENTIAL
PLANE
$\widehat{f_{BRDF}}(x, \omega_i, \omega_0)$

RENDERING OF RELIGHTING VIDEO
USING ESTIMATED BRDF UNDER
ENVIRONMENT MAP FOR
REPLACEMENT SCENE.
RELIGHTING IS POSSIBLE

EP 4 773 586 A1

# FIG.10

CS

PR

| | | |
|---|---|---|
| $D_{CG}$ → | RENDERING UNIT (40) | |
| 3DCG DATA HOLDING UNIT (100) | | |
| | BACKGROUND CG DISPLAY UNIT (LED WALL) (50) → $I_B, I_P$ | |
| | ENVIRONMENT MAP ACQUIRING UNIT (60) → $L_P$ | $P_E$ |
| | SYNTHESIZED ENVIRONMENT MAP ACQUIRING UNIT (70) → $I_E$ | $S_{ES}$ |
| INPUT UNIT (10) → $S_C$ | PHOTO-GRAPHED VIDEO ACQUIRING UNIT (20) → $I_C$ | |

SIGNAL PROCESSING UNIT (30)

FOREGROUND NORMAL ACQUIRING UNIT (31) → $I_N$

BRDF ACQUIRING UNIT (32)

$\widehat{f_{BRDF}}, I_N, P_C, P_E$

RELIGHTING PROCESSING UNIT (33) → $I_{RE}$

FOREGROUND/ BACKGROUND SYNTHESIZING UNIT (34) → $I_F$

OUTPUT UNIT (90)

VIRTUAL ENVIRONMENT MAP ACQUIRING UNIT (80) → $I_{ES}$

$S_S$, $L_B$, $I_E'$, $P_C$, $I_B'$

# FIG.11

BEFORE VP PHOTOGRAPHING
(PRELIMINARY PREPARATION)

DISPLAY TEST VIDEO ON LED WALL,
AND ACQUIRE ENVIRONMENT MAP

OMNIDIRECTIONAL CAMERA: $CM_S$

WD(SCR)

DISPLAY
VIDEO: $L_P$

MONITOR AND
THE LIKE

ENVIRONMENT MAP: $I_E$

$I_E(x',y')$

GEOMETRIC
TRANSFORMATION
FUNCTION: g

$I_E(x',y')=g(I_P(x,y))$

$I_P(x,y)$

TEST VIDEO FOR
CALCULATING GEOMETRIC
TRANSFORMATION FUNCTION: $I_P$

# FIG.12

DURING VP PHOTOGRAPHING

PERFORM GEOMETRIC
TRANSFORMATION
ON BACKGROUND
VIDEO AND SYNTHESIZE
BACKGROUND VIDEO INTO
ENVIRONMENT MAP

DISPLAY VIDEO: $L_B(t)$

CINEMA
CAMERA: $CM_R$

WD(SCR)  SB

FOREGROUND
MONITOR AND
THE LIKE

SYNTHESIZED ENVIRONMENT
MAP OF t-th FRAME: $I_E'(t)$
(SYNTHESIZING BACKGROUND
VIDEO TO LED WALL AREA)

GEOMETRIC
TRANSFORMATION
FUNCTION: g

tBACKGROUND VIDEO
OF t-th FRAME: $I_B(t)$

CG CAMERA:
$CM_V$

3DCG SPACE OF BACKGROUND SCENE

# FIG.13

SYNTHESIZED ENVIRONMENT MAP $g(I_W)$
BEFORE LUMINANCE CORRECTION

LUMINANCE CALIBRATION

CM$_S$

DISPLAY
VIDEO: L$_W$

WD(SCR)

WHITE VIDEO
(LUMINANCE
CALIBRATION VIDEO: I$_W$)

GEOMETRIC
TRANSFORMATION
FUNCTION: g

CALCULATE
LUMINANCE
CORRECTION
COEFFICIENT

$\dfrac{I_E}{g(I_W)}$

ENVIRONMENT MAP I$_E$
(PERFORM PHOTOGRAPHING OF I$_W$
BY OMNIDIRECTIONAL CAMERA)

EP 4 773 586 A1

# FIG.14

3DCG SPACE OF REPLACEMENT SCENE

PHOTOGRAPHING SITE

VIRTUAL OMNIDIRECTIONAL
CAMERA: $CM_{VS}$

DISPLAY VIDEO BEFORE
REPLACEMENT: $L_B$

OMNIDIRECTIONAL CAMERA: $CM_S$

CINEMA
CAMERA: $CM_R$

CG CAMERA: $CM_{VC}$

MONITOR AND
THE LIKE

VIRTUAL ENVIRONMENT MAP: $I_{ES}$
(VIDEO RENDERED BY VIRTUAL
OMNIDIRECTIONAL CAMERA)

BACKGROUND
VIDEO OF
REPLACEMENT
SCENE: $I_B'$

# FIG.15

START

**S1**
PLACE GENERAL STUDIO SET SUCH AS LED WALL AND CINEMA CAMERA AND OMNIDIRECTIONAL CAMERA

**S2**
DISPLAY PATTERN ON LED WALL

**S3**
ACQUIRE CAMERA PARAMETERS OF OMNIDIRECTIONAL CAMERA (3D COORDINATE, ORIENTATION)

**S4**
PERFORM PHOTOGRAPHING WITH OMNIDIRECTIONAL CAMERA TO ACQUIRE ENVIRONMENT MAP

**S5**
CALCULATE GEOMETRIC TRANSFORMATION FUNCTION FROM RENDERED VIDEO TO ENVIRONMENT MAP

**S6**
DISPLAY WHITE VIDEO FOR LUMINANCE CALIBRATION

**S7**
ACQUIRE LUMINANCE CORRECTION COEFFICIENT FOR LUMINANCE CALIBRATION

END

# FIG.16

```
START
```

S11

PERFORM VP PHOTOGRAPHING AND ACQUIRE PHOTOGRAPHED VIDEO

S12

ACQUIRE CAMERA PARAMETER AND BACKGROUND CG ASSOCIATED WITH EACH FRAME NUMBER OF PHOTOGRAPHED VIDEO

S13

EXTRACT SUBJECT AREA OF PHOTOGRAPHED VIDEO

S14

ACQUIRE NORMAL MAP OF SUBJECT AREA

S15

APPLY GEOMETRIC TRANSFORMATION FUNCTION AND LUMINANCE CORRECTION COEFFICIENT TO BACKGROUND CG, AND SUPERIMPOSE BACKGROUND CG ON LED WALL AREA OF ENVIRONMENT MAP, TO ACQUIRE SYNTHESIZED ENVIRONMENT MAP

S16

ACQUIRE BRDF AT EACH PIXEL POSITION OF SUBJECT AREA USING SYNTHESIZED ENVIRONMENT MAP, NORMAL MAP, AND CAMERA PARAMETERS OF OMNIDIRECTIONAL CAMERA AND CINEMA CAMERA

S17

PLACE VIRTUAL OMNIDIRECTIONAL CAMERA IN 3DCG SPACE OF REPLACEMENT SCENE SO AS TO HAVE SAME CORRESPONDENCE RELATIONSHIP AS REAL COORDINATE RELATIONSHIP BETWEEN CINEMA CAMERA AND OMNIDIRECTIONAL CAMERA

S18

PERFORM RENDERING ON ANY CG SCENE USING VIRTUAL OMNIDIRECTIONAL CAMERA, AND ACQUIRE VIRTUAL ENVIRONMENT MAP

S19

PERFORM FOREGROUND RELIGHTING USING ESTIMATED BRDF, VIRTUAL ENVIRONMENT MAP, NORMAL MAP, AND CAMERA PARAMETERS

S20

GENERATE BACKGROUND VIDEO FROM 3DCG DATA OF REPLACEMENT SCENE. SYNTHESIZE WITH RELIGHTING VIDEO TO ACQUIRE SYNTHESIZED VIDEO

```
END
```

## FIG.17

COMPUTER 1000

CPU 1100

RAM 1200

ROM 1300

1050

HDD 1400 1450

PROGRAM DATA

COMMUNICATION INTERFACE 1500

INPUT/OUTPUT INTERFACE 1600

1550

INPUT/OUTPUT DEVICE 1650

## INTERNATIONAL SEARCH REPORT

| International application No. |
| --- |
| **PCT/JP2024/029027** |

### A. CLASSIFICATION OF SUBJECT MATTER

*H04N 5/222*(2006.01)i; *G06T 15/50*(2011.01)i; *G06T 19/00*(2011.01)i; *H04N 5/272*(2006.01)i; *H04N 23/60*(2023.01)i
FI: H04N5/222 400; G06T15/50; G06T19/00 600; H04N5/272; H04N23/60 500

According to International Patent Classification (IPC) or to both national classification and IPC

### B. FIELDS SEARCHED

Minimum documentation searched (classification system followed by classification symbols)

H04N5/222; G06T15/50; G06T19/00; H04N5/272; H04N23/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | Paul DEBEVEC et al, "Acquiring the reflectance field of a human face", Proceedings of the 27th annual conference on Computer graphics and interactive techniques - SIGGRAPH '00, 01 July 2000, pp. 145-156, https://dl.acm.org/doi/10.1145/344779.344855, DOI: 10.1145/344779. 344855 <br> "ABSTRACT" - "5 Discussion and Future work", fig. 1-15 | 1, 9-10 |
| Y | entire text, all drawings | 2-8 |
| X | M.L. KOUDELKA et al., "Image-based modeling and rendering of surfaces with arbitrary BRDFs", Proceedings of the 2001 IEEE Computer Society Conference on Computer Vision and Pattern Recognition. CVPR 2001, 14 November 2001, vol. 1, DOI: 10.1109/ CVPR.2001.990524 <br> "ABSTRACT" - "4 Discussion", fig. 1-8 | 1, 9-10 |
| Y | entire text, all drawings | 2-8 |
| Y | WO 2023/007817 A1 (SONY GROUP CORPORATION) 02 February 2023 (2023-02-02) <br> paragraphs [0006], [0026], [0055], [0091]-[0191] | 2-8 |

☑ Further documents are listed in the continuation of Box C.   ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **02 October 2024** | **22 October 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT

International application No.

**PCT/JP2024/029027**

**C. DOCUMENTS CONSIDERED TO BE RELEVANT**

| Category* | Citation of document, with indication, where appropriate, of the relevant passages | Relevant to claim No. |
|---|---|---|
| Y | JP 2023-118468 A (CANON KABUSHIKI KAISHA) 25 August 2023 (2023-08-25) paragraphs [0011]-[0085] | 3-4 |
| A | Tim Hawkins et al., "A photometric approach to digitizing cultural artifacts", Proceedings of the 2001 conference on Virtual reality, archeology, and cultural heritage - VAST '01, 28 November 2001, pp. 333-342, https://dl.acm.org/doi/10.1145/344779.344855, DOI: 10.1145/344779.344855 entire text, all drawings | 1-10 |
| A | US 2023/0260193 A1 (X-RITE EUROPE GMBH) 17 August 2023 (2023-08-17) entire text, all drawings | 1-10 |
| A | US 2023/0260237 A1 (X-RITE EUROPE GMBH) 17 August 2023 (2023-08-17) entire text, all drawings | 1-10 |

Form PCT/ISA/210 (second sheet) (July 2022)

**INTERNATIONAL SEARCH REPORT**
Information on patent family members

| International application No. |
| --- |
| **PCT/JP2024/029027** |

| Patent document cited in search report | | | Publication date (day/month/year) | Patent family member(s) | | | Publication date (day/month/year) |
| --- | --- | --- | --- | --- | --- | --- | --- |
| WO | 2023/007817 | A1 | 02 February 2023 | EP 4380143 A1 paragraphs [0008]-[0010], [0034], [0072]-[0073], [0118]-[0336] CN 117678216 A | | | |
| JP | 2023-118468 | A | 25 August 2023 | US 2023/0260150 A1 paragraphs [0023]-[0109] | | | |
| US | 2023/0260193 | A1 | 17 August 2023 | (Family: none) | | | |
| US | 2023/0260237 | A1 | 17 August 2023 | (Family: none) | | | |

Form PCT/ISA/210 (patent family annex) (July 2022)

**EP 4 773 586 A1**

**Patent documents cited in the description**

- JP 2003296759 A

- JP 2008102961 A